# EUROPÄISCHE PATENTSCHRIFT

(11) **EP 1 474 618 B1**
(45) Veröffentlichungstag und Bekanntmachung des Hinweises auf die Patenterteilung: **17.08.2005**
(21) Anmeldenummer: 02806792.4
(22) Anmeldetag: 19.12.2002
(51) Int. Cl.: F16D 65/78, B60T 17/22

(54) **VORRICHTUNG ZUR DURCHGÄNGIGKEITSINSPEKTION DER BELÜFTUNGSKANÄLE EINER INNENBELÜFTETEN BREMSSCHEIBE**
DEVICE FOR CONTROLLING THE CONTINUITY OF THE VENTILATION DUCTS OF AN INTERNALLY VENTILATED BRAKE DISK
DISPOSITIF DE VERIFICATION DE LA PENETRABILITE DES CANAUX DE VENTILATION D'UN DISQUE DE FREIN VENTILE DE L'INTERIEUR

(30) Priorität: 14.02.2002 DE 10206307; 14.10.2002 DE 10247858
(43) Veröffentlichungstag der Anmeldung: 10.11.2004
(73) Patentinhaber: Hottinger Maschinenbau GmbH, 68219 Mannheim (DE)
(72) Erfinder: BEYERER, Jürgen, 69234 Dielheim (DE)
(74) Vertreter: Naumann, Ulrich, Dr.-Ing.
(86) Internationale Anmeldenummer: PCT/DE2002/004660
(87) Internationale Veröffentlichungsnummer: WO 2003/069182

(56) Entgegenhaltungen:
- IT-B- 1 182 278

## Beschreibung

Die vorliegende Erfindung betrifft eine Vorrichtung zur Durchgängigkeitsinspektion der Belüftungskanäle einer Bremsscheibe, wobei sich die Belüftungskanäle als vorzugsweise radiale Kanäle vom äußeren Rand der Bremsscheibe in einen mittigen Durchgang (innenbelüftete Bremsscheibe) oder in einen um den mittigen Durchgang ausgebildeten, axial nach außen geöffneten Belüftungsring (außenbelüftete Bremsscheibe) erstrecken.

Bremsscheiben werden üblicherweise gußtechnisch hergestellt. Problematisch sind dabei die Belüftungskanäle**,** die sich als radiale Kanäle vom äußeren Rand der Bremsscheibe entweder in einen mittigen Durchgang bei innenbelüfteten Bremsscheiben oder in einen um den mittigen Durchgang ausgebildeten, nach außen geöffneten Belüftungsring bei außenbelüfteten Bremsscheiben erstrecken. Nicht selten ist die Ausbildung der Belüftungskanäle nach gußtechnischer Herstellung insoweit mangelhaft, als einer oder gleich mehrere der Belüftungskanäle geschlossen oder nicht hinreichend durchgängig bzw. geöffnet sind. Eine hinreichende Kühlung im Betrieb der Bremsscheibe ist dann nicht mehr gewährleistet.

Zur Inspektion bzw. Fertigungskontrolle von Bremsscheiben wurden diese bislang gedreht und wurde jeder einzelne Belüftungskanal nacheinander durch dort hindurchtretendes Licht inspiziert. Dies erfordert einen ganz erheblichen mechanischen Aufwand und ist zeit- und kostenintensiv. Einem Bestreben nach Kostenreduktion aufgrund der gegebenen wettbewerbsrechtlichen Situation kann dieses Vorgehen nunmehr gerecht werden.

Der vorliegenden Erfindung liegt daher die Aufgabe zugrunde, eine Vorrichtung zur Durchgängigkeitsinspektion der Belüftungskanäle einer Bremsscheibe anzugeben, wonach eine solche Durchgängigkeitsinspektion mit einfachen Mitteln zuverlässig, schnell und reproduzierbar möglich ist.

Die voranstehende Aufgabe wird durch die Merkmale des Patentanspruchs 1 gelöst. Danach ist eine gattungsbildende Vorrichtung zur Durchgängigkeitsinspektion der Belüftungskanäle einer Bremsscheibe gekennzeichnet durch mindestens eine Lichtquelle zum gleichzeitigen Durchleuchten der Kanäle und durch eine Kamera zur gleichzeitigen Aufnahme des durch die Kanäle hindurchtretenden Lichts, wobei die Form und/oder die Intensität eines jeden durch die Kamera erhaltenen Lichtpunkts zur Beurteilung der Durchgängigkeit bzw. Qualität des jeweiligen Kanals dient.

Erfindungsgemäß ist erkannt worden, dass man die Belüftungskanäle einer Bremsscheibe dadurch sicher und zuverlässig inspizieren kann, dass man die Kanäle gleichzeitig durchleuchtet und mit einer Kamera gleichzeitig das durch die Kanäle hindurchtretende Licht aufnimmt. Wesentlich ist dabei die gleichzeitige Beleuchtung aller Belüftungskanäle, sodass zum Zwecke der Durchgängigkeitsinspektion auch nur eine einzige Aufnahme bzw. das gleichzeitige Aufnehmen des so entstehenden Lichtpunktbildes erforderlich ist. Form und/oder Intensität eines jeden durch die Kamera erhaltenen Lichtpunkts dient dabei zur Beurteilung der Durchgängigkeit bzw. Qualität eines jeden Kanals.

Des Weiteren ist es von Vorteil, wenn der Kamera eine Rechnereinheit zur Bildverarbeitung bzw. Signalauswertung nachgeschaltet ist, wobei es sich bei der Kamera bereits um eine Digitalkamera handeln kann. Andernfalls müsste das aufgenommene Bild digitalisiert und danach der Rechnereinheit und der eigentlichen Bildverarbeitung bzw. Signalauswertung zugeführt werden. Insoweit ist es möglich, über die nachgeschaltete Bildverarbeitung bzw. Signalauswertung einen Grenzwert vorzugeben, wonach eine Bremsscheibe als hinreichend gut oder als unzureichend und somit als Ausschuss zu qualifizieren ist.

Im Hinblick auf die Durchleuchtung der Kanäle und die Aufnahme des durch die Kanäle hindurchtretenden Lichts sind zahlreiche konkrete Anordnungen von Lichtquelle und Kamera möglich. So ist es im Rahmen einer ersten Variante denkbar, dass die Lichtquelle vorzugsweise ringförmig um die Austritte der vorzugsweise radial verlaufenden Kanäle angeordnet ist, sodass das Licht durch die Kanäle zum mittigen Durchgang gelangt. Mit anderen Worten wird im Rahmen einer solchen Ausgestaltung die Lichtquelle um die Bremsscheibe herum im Bereich der Kanalaustritte angeordnet, sodass das Licht ungehindert durch die Kanäle bis zum mittigen Durchgang hindurchtreten kann.

Im mittigen Durchgang könnte nun eine Spiegelanordnung positioniert sein, die das dort auftreffende Licht zu der vorzugsweise mittig zum Durchgang außerhalb der Bremsscheibe angeordneten Kamera lenkt. Bei der Spiegelanordnung könnte es sich um einen kegelförmigen Spiegel handeln, der das Licht entsprechend dem Winkel der Spiegeloberfläche nach außerhalb zur Kamera hin reflektiert.

Die Kamera könnte mit einem weitwinkligen Objektiv ausgestattet sein, sodass ein regelrechtes Hinein- oder Hindurchschauen in bzw. durch die Kanäle möglich ist. Sofern es sich bei dem Objektiv um ein extrem weitwinkliges Objektiv, vorzugsweise um ein Fischauge, handelt, könnte bei entsprechender Anordnung des Kameraobjektivs der innerhalb des Durchgangs anzuordnende Spiegel eingespart werden. Dazu könnte das Objektiv unmittelbar an- oder zumindest teilweise in dem mittigen Durchgang der Bremsscheibe angeordnet sein. Eine möglichst einfache Ausgestaltung der erfindungsgemäßen Vorrichtung wäre dadurch realisiert, und zwar ohne die Vorkehrung des im Durchgang sonst erforderlichen Spiegels.

Wie bereits zuvor erwähnt, könnte im mittigen Durchgang eine Spiegelanordnung positioniert sein, die das dort auftreffende Licht zu der vorzugsweise mittig zum Durchgang außerhalb der Bremsscheibe angeordneten Kamera lenkt. Die Kamera könnte wiederum konzentrisch zu dem Durchgang angeordnet sein. Zur gleichzeitigen Umlenkung des von allen Kanälen her kommenden Lichts bietet sich die Vorkehrung eines kegelförmigen Spiegels besonders an, um nämlich - über den Spiegel umgelenkt - gleichzeitig das aus den Kanälen kommende Licht aufnehmen zu können.

Ebenso ist eine umkehrte Anordnung denkbar, wonach nämlich die Lichtquelle zumindest teilweise innerhalb des Durchgangs der Bremsscheibe angeordnet ist, sodass das Licht durch die Kanäle vorzugsweise radial nach außen geleitet wird. Entsprechend ist das durch die Kanäle hindurch tretende Licht vom Randbereich der Bremsscheibe her zu detektieren bzw. über eine Spiegelanordnung zu einer Kamera umzulenken.

Ähnlich verhält es sich mit einer Lichtquelle, die vorzugsweise mittig zum Durchgang außerhalb der Bremsscheibe angeordnet ist. In einem solchen Falle müsste das Licht über eine in etwa mittig im Durchgang positionierte Spiegelanordnung durch die Kanäle vorzugsweise radial nach außen gelenkt werden. Letztendlich handelt es sich hier um die umgekehrte Anordnung wie bei dem erstgenannten Ausführungsbeispiel, da hier nämlich das Licht zunächst in den Durchgang hinein gelangt und dort über eine Spiegelanordnung, die vorzugsweise kegelförmig ausgeführt ist, durch die Kanäle hindurch nach außen gelangt. Entsprechend müsste um den Rand der Bremsscheibe und somit um die Austritte der Kanäle herum die Kamera angeordnet sein. Will man die einzelnen Bildpunkte gleichzeitig aufnehmen, so bietet es sich auch hier wieder ein, um die Austritte der Kanäle herum eine Spiegelanordnung zu positionieren, die das dort austretende Licht gleichzeitig zu der Kamera umlenkt. Im Konkreten könnte es sich bei der um die Bremsscheibe herum angeordneten Spiegelanordnung um einen streifenförmigen, innenverspiegelten Kegelmantelausschnitt handeln, durch den das aus den Kanälen austretende Licht dem Objektiv einer einzigen Kamera zugeführt wird. Abermals werden alle Bildpunkte der jeweiligen Kanäle gleichzeitig detektiert und können daher gleichzeitig hinsichtlich der Qualität des Durchgangs analysiert bzw. gewertet werden.

Sofern im Durchgang innerhalb der Bremsscheibe eine Spiegelanordnung erforderlich ist, ist diese vorzugsweise kegelförmig oder kegelstumpfförmig ausgebildet und in ihrer Fläche zum auftreffenden Strahl sowie in ihrer Position entsprechend ausgerichtet.

Im Rahmen einer weiteren - alternativen - Ausgestaltung der erfindungsgemäßen Vorrichtung ist es möglich, dass die Lichtquelle vorzugsweise ringförmig um die Austritte der vorzugsweise radial verlaufenden Kanäle angeordnet ist, sodass das Licht durch die Kanäle hindurch - im Fallen einer außenbelüfteten Bremsscheibe - zum Belüftungsring gelangt. Insoweit würde das Licht unmittelbar in die Kanäle eingeleitet werden. Alternativ dazu könnte die Lichtquelle vorzugsweise ringförmig mit einem zumindest geringfügig größeren Durchmesser als die Bremsscheibe vorzugsweise konzentrisch um den Bereich der Austritte der vorzugsweise radial verlaufenden Kanäle angeordnet sein. Über eine Spiegelanordnung würde das Licht in die Kanäle umgelenkt werden, sodass das Licht abermals durch die Kanäle zum Belüftungsring gelangt. In beiden Fällen trifft das Licht nach Durchschreiten der Kanäle über eine den Belüftungsring nach innen grenzende, konzentrische, vorzugsweise orthogonal zu den Kanälen ausgebildete Außenwandung und wird durch die Außenwandung nach außen umgelenkt. Bei entsprechender Ausgestaltug der Außenwandung wäre es denkbar, dass das aus den jeweiligen Kanälen kommende Licht bzw. die einzelnen Bildpunkte unmittelbar zum Objektiv einer Kamera gelangen. Ebenso könnte es erforderlich sein, dass außerhalb der Bremsscheibe eine dazu konzentrisch angeordnete ringförmige Spiegelanordnung vorgesehen ist, die das Licht gleichzeitig zur Kamera umlenkt. Die Spiegelanordnung könnte als zylindrischer Spiegel mit Innenverspiegelung ausgeführt sein. Mittel zur Fokussierung der jeweiligen Lichtpunkte könnten ebenso vorgesehen sein.

Im Rahmen einer weiteren alternativen Ausgestaltung könnte die Lichtquelle vorzugsweise konzentrisch um den Bereich der Austritte der vorzugsweise radial verlaufenden Kanäle oder des Belüftungsrings angeordnet sein. Über eine ringförmige, vorzugsweise orthogonal zu den Kanälen ausgebildete Außenwandung könnte das Licht in die Kanäle umgelenkt werden, ohne dass dazu weitere Einrichtungen erforderlich sind. Von dort aus gelangt das Licht durch die Kanäle hindurch nach außen und kann vom äußeren Rand her detektiert werden. Dazu könnte vorzugsweise konzentrisch um die Kanäle eine Spiegelanordnung positioniert sein, die das dort auftreffende Licht gleichzeitig zu der vorzugsweise mittig zum Durchgang außerhalb der Bremsscheibe angeordneten Kamera lenkt. Die Spiegelanordnung könnte als kegelmantelförmiger Spiegel mit Innenverspiegelung ausgeführt sein.

Die Kamera könnte mit einem weitwinkligen Objektiv ausgestattet sein, sodass sämtliche Bildpunkte der jeweiligen Kanäle gleichzeitig aufnehmbar sind.

Es gibt nun verschiedene Möglichkeiten, die Lehre der vorliegenden Erfindung auszugestalten und weiterzubilden. Dazu sei einerseits auf die dem Patentanspruch 1 nachgeordneten abhängigen Patentansprüche und andererseits auf die Ausführungen der bevorzugten Ausführungsbeispiele der Erfindung anhand der Zeichnung verwiesen. In der Zeichnung zeigt
- Fig. 1: in einer schematischen Ansicht eine innenbelüftete Bremsscheibe mit durch Licht visualisierten Kanälen in einer Draufsicht,
- Fig. 2: den Gegenstand aus Fig. 1, vergrößert, in einer perspektivischen Seitenansicht,
- Fig. 3: in einer schematischen Seitenansicht ein erstes Ausführungsbeispiel einer erfindungsgemäßen Vorrichtung zur Prüfung innenbelüfteter Bremsscheiben mit ringförmiger Beleuchtung und Kamera mit Weitwinkelobjektiv,
- Fig. 4: in einer schematischen Seitenansicht ein weiteres Ausführungsbeispiel einer erfindungsgemäßen Vorrichtung zur Prüfung innenbelüfteter Bremsscheiben mit innerhalb der Bremsscheibe angeordnetem Spiegel,
- Fig. 5: in einer schematischen Seitenansicht ein weiteres Ausführungsbeispiel einer erfindungsgemäßen Vorrichtung zur Prüfung außenbelüfteter Bremsscheiben mit ringförmig angeordneter Beleuchtung,
- Fig. 6: in einer schematischen Seitenansicht ein weiteres Ausführungsbeispiel einer erfindungsgemäßen Vorrichtung zur Prüfung außenbelüfteter Bremsscheiben mit ringförmiger Spiegelanordnung außen und
- Fig. 7: in schematischer Darstellung das die Kanäle betreffende Detektionsbild einer innenbelüfteten Bremsscheibe, bei der ein Kanal blockiert bzw. verstopft ist.

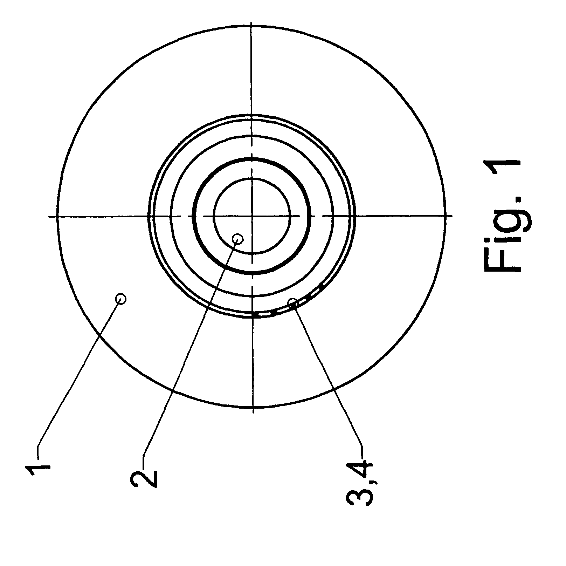

Fig. 1 zeigt in einer schematischen Draufsicht eine innenbelüftete Bremsscheibe 1 mit einem mittigen Durchgang 2. Die die Belüftungskanäle bildenden radialen Kanäle 3 sind erkennbar, und zwar aufgrund der dort angedeuteten Lichtpunkte 4. Die Beleuchtung erfolgt hierbei von außen zur Mitte bzw. zum Durchgang 2 hin.

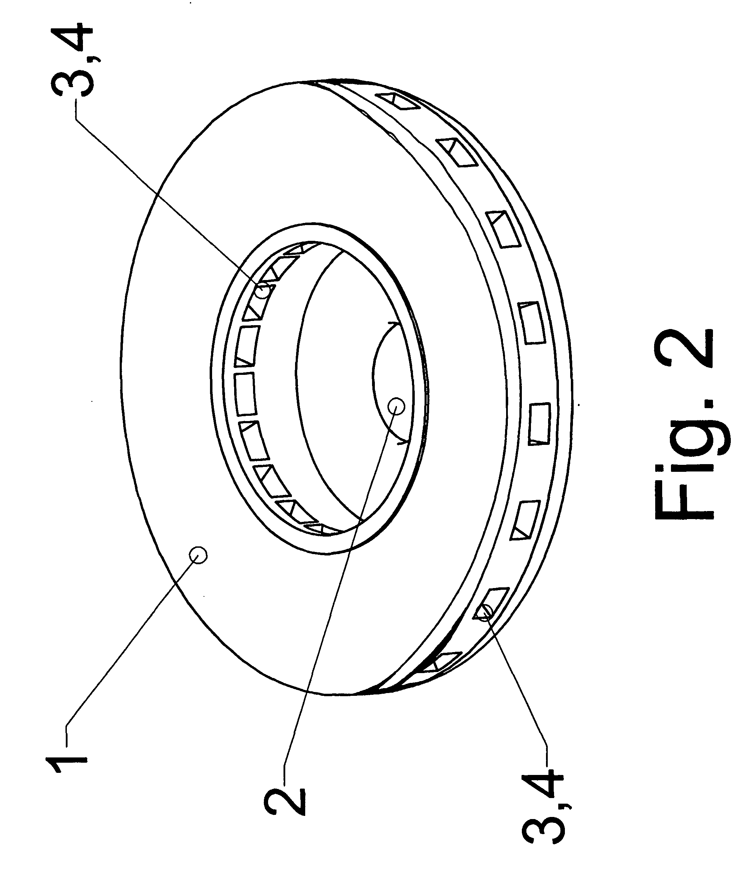

Fig. 2 zeigt die gleiche Bremsscheibe 1 in einer perspektivischen Seitenansicht. Auch hier ist der mittige Durchgang 2 und sind die radialen Kanäle 3 mit den jeweiligen Lichtpunkten 4 erkennbar. Sofern die Lichtpunkte 4 von außen sichtbar sind, erfolgt die Beleuchtung von innerhalb der Bremsscheibe 1 bzw. vom mittigen Durchgang 2 her.

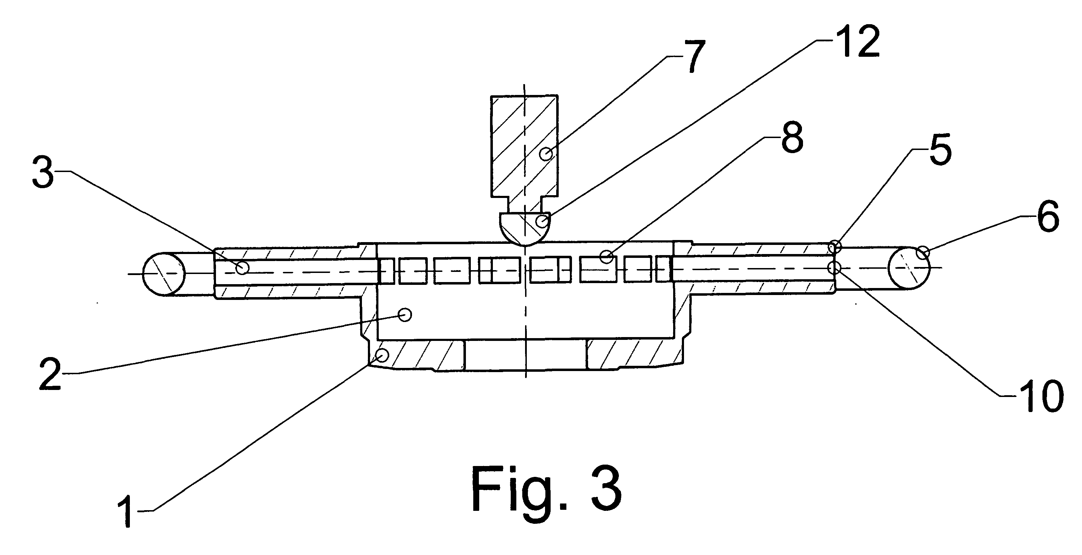

Bei dem Ausführungsbeispiel einer erfindungsgemäßen Vorrichtung gemäß Fig. 3 handelt es sich um eine Vorrichtung zur Durchgängigkeitsinspektion der Belüftungskanäle einer innenbelüfteten Bremsscheibe 1, wobei sich die Belüftungsspeichen als radiale Kanäle 3 vom äußeren Rand 5 der Bremsscheibe 1 in einen mittigen Durchgang 2 hinein erstrecken. Zwei der Kanäle 3 sind erkennbar.

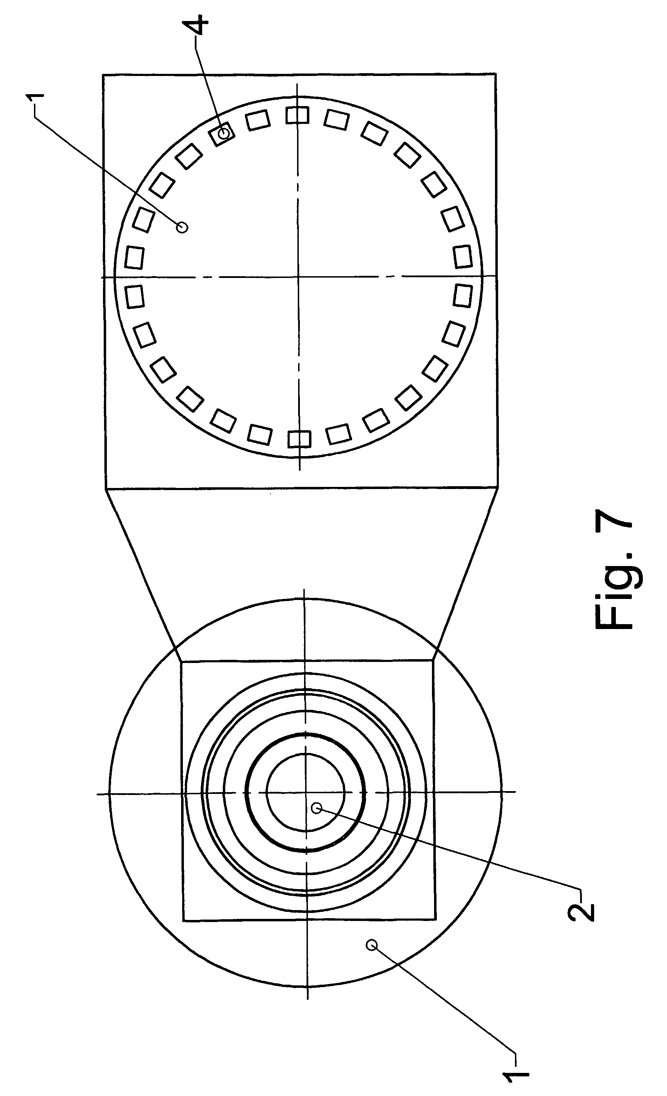

Erfindungsgemäß dient eine Lichtquelle 6 zum gleichzeitigen Durchleuchten der Kanäle 3. Eine Kamera 7 dient zur gleichzeitigen Aufnahme des durch die Kanäle 3 hindurchtretenden, in Fig. 3 schematisch gezeigten Lichts 8. Die Form und/oder die Intensität eines jeden durch die Kamera 7 erhaltenen Lichtpunkts 4 dient wiederum zur Beurteilung der Durchgängigkeit bzw. Qualität des jeweiligen Kanals 3. Insoweit wird auf Fig. 7 verwiesen.

Lediglich der guten Ordnung halber sei hier noch einmal erwähnt, dass der Kamera 7 eine in den Figuren nicht gezeigte Rechnereinheit zur Signalauswertung nachgeschaltet ist. Beliebige Prozeduren bis hin zur Steuerung einer entsprechenden Anlage sind denkbar.

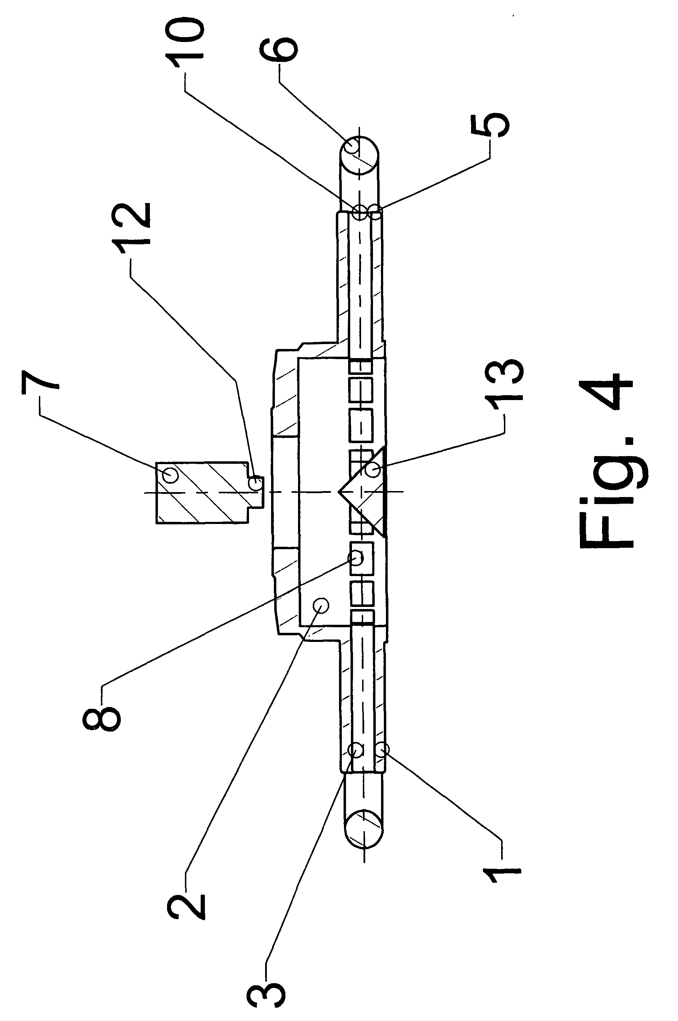

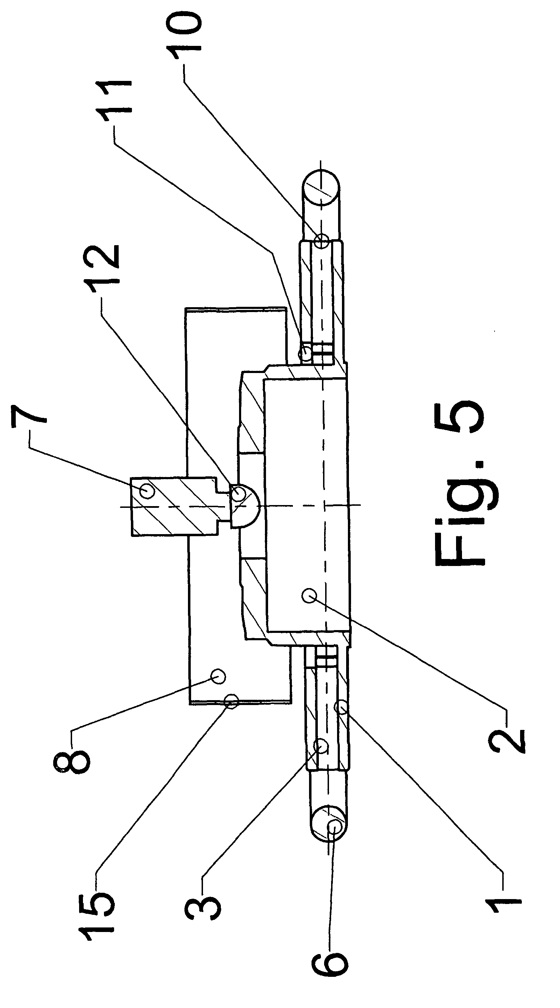

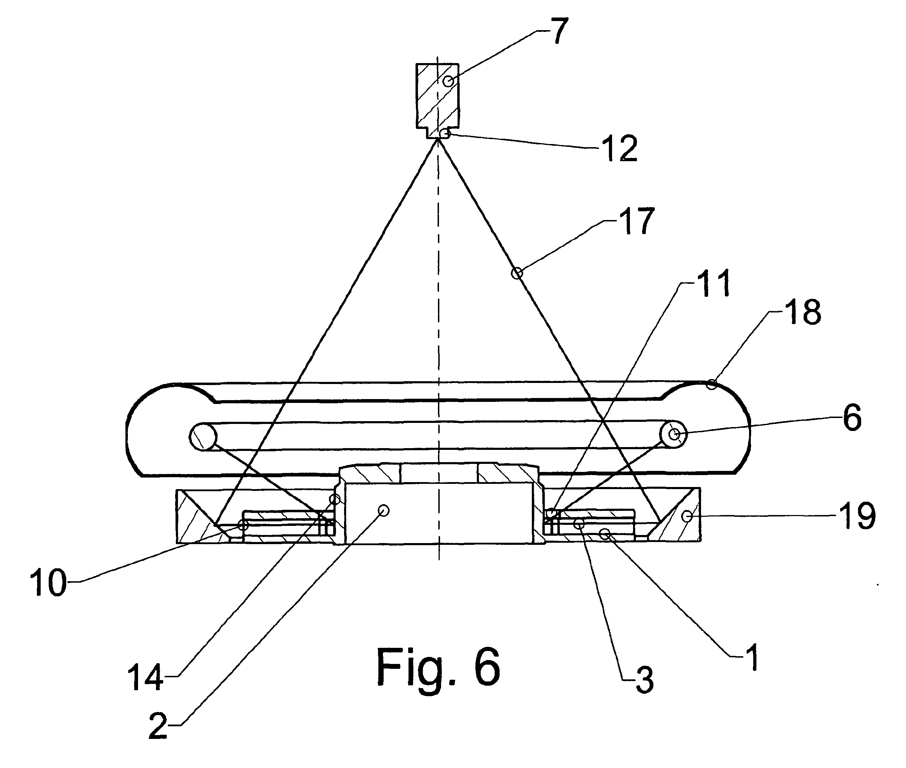

In den Fig. 3 bis 6 ist die Lichtquelle 6 ringförmig ausgebildet. Bei dem in den Fig. 3, 4 und 5 gezeigten Ausführungsbeispielen ist die ringförmige Lichtquelle 6 um die Austritte 10 der radial verlaufenden Kanäle 3 angeordnet, sodass das Licht 8 unmittelbar durch die Kanäle 3 entweder zum mittigen Durchgang 2 gemäß den Fig. 3 und 4 oder zu einem Belüftungsring 11 gemäß den Fig. 5 und 6 gelangt, wobei im Rahmen der die Fig. 5 und 6 betreffenden Ausführungsbeispiele eine außenbeleuchtete Bremsscheibe 1 inspiziert wird.

Fig. 3 lässt erkennen, dass dort das Licht 8 in den mittigen Durchgang 2 hinein strahlt. Zur Detektion der jeweiligen Lichtpunkte 4 ist eine ganz besondere Kamera 7 vorgesehen, die nämlich mit einem extremen Weitwinkelobjektiv 12, nämlich mit einem sogenannten Fischauge, ausgestattet ist. Dadurch ist es möglich, über das Objektiv 12 regelrecht in die Kanäle 3 hineinzuschauen und dort die einzelnen Lichtpunkte 4 des hindurchtretenden Lichts 8 aufzunehmen. Die dabei entstehende Aufnahme entspricht der in Fig. 7 gezeigten kreisringförmigen Anordnung von Lichtpunkten 4.

Im Rahmen des in Fig. 4 gezeigten Ausführungsbeispiels einer erfindungsgemäßen Vorrichtung ist die Kamera 7 mit einem herkömmlichen Objektiv 12 ausgestattet, wobei die Kamera 7 mit dem Objektiv 12 außerhalb und in vorgegebener Distanz zu der Bremsscheibe 1 steht. Das in den mittigen Durchgang 2 geleitete Licht 8 trifft dort auf eine Spiegelanordnung 13, wobei es sich dabei im Konkreten um eine verspiegelte Kegelmantelfläche handelt. Von dort wird das Licht 8 durch den Durchgang 2 hindurch nach außen zum Objektiv 12 der Kamera 7 umgelenkt. Auch hier entsteht eine Abbildung der einzelnen Lichtpunkte 4 gemäß der Darstellung in Fig. 7.

Fig. 5 zeigt ein weiteres Ausführungsbeispiel einer erfindungsgemäßen Vorrichtung, wobei dort eine außenbelüftete Bremsscheibe 1 inspiziert wird. Auch hier ist eine ringförmige Lichtquelle 6 um die Bremsscheibe 1 herum im Bereich der jeweiligen Austritte 10 der Kanäle 3 angeordnet, wobei das durch die Kanäle 3 hindurchtretende Licht 8 auf eine Außenwandung 14 der Bremsscheibe 1 trifft, die orthogonal zu den Kanälen 3 ringförmig ausgebildet ist. Das dort auftretende Licht 8 wird reflektiert, gelangt von dort nach außen und wird um einen um den Bereich der Außenwandung 14 herum angeordneten Spiegel 15 zur Kamera 7 gelenkt. Bei dem Spiegel 15 handelt es sich um einen zylindrischen Ring mit Innenverspiegelung. Die Kamera 7 kann mit einem herkömmlichen Objektiv 12 oder mit einem Weitwinkelobjektiv bzw. Fischauge ausgestattet sein. Das aufgenommene Bild entspricht wiederum der Darstellung aus Fig. 7 in Bezug auf die detektierten Lichtpunkte 4.

Bei dem in Fig. 6 gezeigten Ausführungsbeispiel wird ebenfalls eine außenbelüftete Bremsscheibe 1 inspiziert. Im Gegensatz zu den bislang erörterten Ausführungsbeispielen ist dort die Lichtquelle 6 abseits der Austritte 10 der Kanäle 3 angeordnet, nämlich vor der Bremsscheibe 1 in deren unmittelbaren Bereich, und zwar vorzugsweise konzentrisch zur Bremsscheibe 1. Das von der Lichtquelle 6 ausgesandte Licht 17 wird in den Bereich des Belüftungsrings 11 gestrahlt, nämlich mit Hilfe eines besonderen Reflektors 18. Im Bereich des Belüftungsrings 11 wird das Licht 17 an der Außenwandung 14 der Bremsscheibe 1 reflektiert und in die radial verlaufenden Kanäle 3 hinein geleitet. Nachdem das Licht 17 die radialen Kanäle 3 durchlaufen hat, wird es an einem kegelmantelförmigen Spiegel 19 reflektiert, wobei dieser Spiegel 19 um die Bremsscheibe 1 herum im Bereich der Austritte 10 konzentrisch angeordnet ist. Von dort wird das Licht 17 zu der Kamera 7 gelenkt, die mit einem herkömmlichen Objektiv 12 ausgestattet ist. Im Hinblick auf das in Fig. 6 gezeigte Ausführungsbeispiel sei angemerkt, dass auch hier der Strahlengang von einer um die Bremsscheibe 1 bzw. die Austritte 10 der Kanäle 3 herum angeordneten Lichtquelle 6 über den Belüftungsring 11 und eine nachgeschaltete Spiegelanordnung 19 zur Kamera 7 verlaufen kann.

Fig. 7 zeigt am Beispiel einer beliebigen Bremsscheibe 1, welches Bild durch gleichzeitige Detektion der Lichtpunkte 4 entsteht. Bei dem hier gewählten Ausführungsbeispiel fehlt einer der Lichtpunkte 4, sodass hier auf einen verschlossenen Kanal geschlossen werden kann.

Abschließend sei angemerkt, dass die voranstehend erörterten Ausführungsbeispiele lediglich der beispielhaften Erörterung der beanspruchten Lehre dienen, diese jedoch nicht auf die Ausführungsbeispiele einschränken.

## Patentansprüche

1. Vorrichtung zur Durchgängigkeitsinspektion der Belüftungskanäle einer Bremsscheibe (1), die eine Vielzahl von über deren gesamten Umfang verteilten Belüftungskanälen aufweist, wobei sich die Belüftungskanäle im wesentlichen radial vom äußeren Rand (5) der Bremsscheibe (1) in einen mittigen Durchgang (2) oder in einen um den mittigen Durchgang (2) ausgebildeten, axial nach außen geöffneten Belüftungsring (11) erstrecken,
**gekennzeichnet durch** mindestens eine Lichtquelle (6) zum gleichzeitigen Durchleuchten aller Kanäle (3) und **durch** eine Kamera (7) zur gleichzeitigen Aufnahme des **durch** alle Kanäle (3) hindurchtretenden Lichts (8), wobei die Form und/oder die Intensität eines jeden **durch** die Kamera (7) erhaltenen Lichtpunkts (4) zur Beurteilung der Durchgängigkeit bzw. Qualität des jeweiligen Kanals (3) dient.

2. Vorrichtung nach Anspruch 1, **dadurch gekennzeichnet, dass** der Kamera (7) eine Rechnereinheit zur Bildverarbeitung bzw. Signalauswertung nachgeschaltet ist.

3. Vorrichtung nach Anspruch 1 oder 2, **dadurch gekennzeichnet, dass** die Lichtquelle (6) vorzugsweise ringförmig um die Austritte (10) der vorzugsweise radial verlaufenden Kanäle (3) angeordnet ist, so dass das Licht (8) durch die Kanäle (3) zum mittigen Durchgang (2) gelangt.

4. Vorrichtung nach einem der Ansprüche 1 bis 3, **dadurch gekennzeichnet, dass** im mittigen Durchgang (3) eine Spiegelanordnung (13) positioniert ist, die das dort auftreffende Licht (8) zu der vorzugsweise mittig zum Durchgang (2) außerhalb der Bremsscheibe (1) angeordneten Kamera (7) lenkt.

5. Vorrichtung nach einem der Ansprüche 1 bis 4, **dadurch gekennzeichnet, dass** die Kamera (7) mit einem vorzugsweise extrem weitwinkligen Objektiv (12), insbesondere mit einem Fischauge, zum Hinein- oder Hindurchschauen in bzw. durch die Kanäle (3) ausgestattet ist, wobei das Objektiv (12) unmittelbar an oder zumindest teilweise in dem mittigen Durchgang (2) der Bremsscheibe (1) angeordnet sein kann.

6. Vorrichtung nach einem Ansprüche 1 bis 5, **dadurch gekennzeichnet, dass** im mittigen Durchgang (2) eine Spiegelanordnung (13) positioniert ist, die das dort auftreffende Licht (8) zu der vorzugsweise mittig zum Durchgang (2) außerhalb der Bremsscheibe (1) angeordneten Kamera (7) lenkt.

7. Vorrichtung nach Anspruch 1 oder 2, **dadurch gekennzeichnet, dass** die Lichtquelle (6) zumindest teilweise innerhalb des Durchgangs (2) der Bremsscheibe (1) angeordnet ist, sodass das Licht (8) durch die Kanäle (3) vorzugsweise radial nach außen geleitet wird, oder dass die Lichtquelle (6) vorzugsweise mittig zum Durchgang (2) außerhalb der Bremsscheibe (1) angeordnet ist, und dass das Licht (8) über eine in etwa mittig im Durchgang (2) positionierte Spiegelanordnung (13) durch die Kanäle (3) vorzugsweise radial nach außen gelenkt wird, wobei um den Rand (5) der Bremsscheibe (1) und somit um die Austritte (10) der Kanäle (3) herum eine Spiegelanordnung (19) positioniert sein kann, die das dort austretende Licht (8) gleichzeitig zu der Kamera (7) umlenkt, wobei die um die Bremsscheibe (1) herum angeordnete Spiegelanordnung (19) als vorzugsweise streifenförmiger, innenverspiegelter Kegelmantelausschnitt ausgebildet sein kann und wobei die im mittigen Durchgang (2) positionierte Spiegelanordnung (13) als kegelförmiger Spiegel (15) ausgebildet sein kann.

8. Vorrichtung nach Anspruch 1 oder 2, **dadurch gekennzeichnet, dass** die Lichtquelle (6) vorzugsweise ringförmig um die Austritte (10) der vorzugsweise radial verlaufenden Kanäle (3) angeordnet ist, sodass das Licht (8) durch die Kanäle (3) zum Belüftungsring (11) gelangt, oder dass die Lichtquelle (6) vorzugsweise ringförmig mit einem zumindest geringfügig größeren Durchmesser als die Bremsscheibe (1) vorzugsweise konzentrisch um den Bereich der Austritte (10) der vorzugsweise radial verlaufenden Kanäle (3) angeordnet ist und über eine Spiegelanordnung (15) in die Kanäle (3) umgelenkt wird, sodass das Licht (8) durch die Kanäle (3) zum Belüftungsring (11) gelangt, wobei das Licht (8) über eine den Belüftungsring (11) nach innen begrenzende, konzentrische, vorzugsweise orthogonal zu den Kanälen (3) ausgebildete Außenwandung (14) nach außen umgelenkt werden kann, wobei außerhalb der Bremsscheibe (1) eine dazu konzentrisch angeordnete ringförmige Spiegelanordnung (15) vorgesehen sein kann, die das Licht (8) gleichzeitig zur Kamera (7) umlenkt und wobei die Spiegelanordnung (15) als zylindrischer Spiegel mit Innenverspiegelung ausgeführt sein kann.

9. Vorrichtung nach Anspruch 1 oder 2, **dadurch gekennzeichnet, dass** die Lichtquelle (6) vorzugsweise konzentrisch um den Bereich der Austritte (10) der vorzugsweise radial verlaufenden Kanäle (3) oder des Belüftungsrings (11) angeordnet ist und über eine ringförmige, vorzugsweise orthogonal zu den Kanälen (3) ausgebildete Außenwandung (14) in die Kanäle (3) umgelenkt wird, sodass das Licht (17) durch die Kanäle (3) nach außen gelangt, wobei vorzugsweise konzentrisch um die Kanäle (3) eine Spiegelanordnung (19) positioniert sein kann, die das dort auftreffende Licht (17) gleichzeitig zu der vorzugsweise mittig zum Durchgang (2) außerhalb der Bremsscheibe (1) angeordneten Kamera (7) lenkt und wobei die Spiegelanordnung (19) als kegelmantelförmiger Spiegel mit Innenverspiegelung ausgeführt sein kann.

10. Vorrichtung nach Anspruch 8 oder 9, **dadurch gekennzeichnet, dass** die Kamera (7) mit einem weitwinkligen Objektiv (12) ausgestattet ist.

## Claims

1. Device for checking the continuity of the ventilation ducts of a brake disc (1) comprising a plurality of ventilation ducts distributed over its entire circumference, wherein the ventilation ducts extend substantially radially from the outer edge (5) of the brake disc (1) into a central passage (2) or into a ventilation ring (11) which is formed around the central passage (2) and opens axially outwards,
**characterised by** at least one light source (6) for simultaneously transilluminating all the ducts (3) and by a camera (7) for simultaneously recording the light (8) passing through all the ducts (3), wherein the form and/or the intensity of each light spot (4) which is captured by the camera (7) serve(s) to assess the continuity or quality of the respective duct (3).

2. Device according to Claim 1, **characterised in that** a computer unit for image processing or signal evaluation is connected downstream of the camera (7).

3. Device according to Claim 1 or 2, **characterised in that** the light source (6) is preferably disposed in the shape of a ring around the outlets (10) of the preferably radially extending ducts (3), so that the light (8) passes through the ducts (3) to the central passage (2).

4. Device according to any one of Claims 1 to 3, **characterised in that** a mirror arrangement (13) is positioned in the central passage (3), which arrangement directs the light (8) impinging here to the camera (7), which is preferably disposed centrally relative to the passage (2) outside of the brake disc (1).

5. Device according to any one of Claims 1 to 4, **characterised in that** the camera (7) is provided with a preferably extremely wide-angle lens (12), in particular with a fisheye, for looking into or through the ducts (3), wherein the lens (12) may be disposed directly at or at least partly in the central passage (2) of the brake disc (1).

6. Device according to any one of Claims 1 to 5, **characterised in that** a mirror arrangement (13) is positioned in the central passage (2), which arrangement directs the light (8) impinging here to the camera (7), which is preferably disposed centrally relative to the passage (2) outside of the brake disc (1).

7. Device according to Claim 1 or 2, **characterised in that** the light source (6) is disposed at least partly inside the passage (2) of the brake disc (1), so that the light (8) is guided preferably radially outwards through the ducts (3), or that the light source (6) is preferably disposed centrally relative to the passage (2) outside of the brake disc (1), and that the light (8) is directed preferably radially outwards through the ducts (3) via a mirror arrangement (13) positioned approximately centrally in the passage (2), wherein a mirror arrangement (19) may be positioned around the edge (5) of the brake disc (1) and therefore around the outlets (10) of the ducts (3), which arrangement simultaneously deflects the light (8) emerging here to the camera (7), wherein the mirror arrangement (19) disposed around the brake disc (1) may be formed as a preferably strip-shaped, internally metallized cone envelope segment, and wherein the mirror arrangement (13) positioned in the central passage (2) may be formed as a conical mirror (15).

8. Device according to Claim 1 or 2, **characterised in that** the light source (6) is preferably disposed in the shape of a ring around the outlets (10) of the preferably radially extending ducts (3), so that the light (8) passes through the ducts (3) to the ventilation ring (11), or that the light source (6) is preferably disposed in the shape of a ring with an at least slightly larger diameter than the brake disc (1) preferably concentrically around the region of the outlets (10) of the preferably radially extending ducts (3) and is deflected into the ducts (3) via a mirror arrangement (15), so that the light (8) passes through the ducts (3) to the ventilation ring (11), wherein the light (8) can be deflected outwards via an outer wall (14) which internally delimits the ventilation ring (11) and is formed concentrically with, preferably orthogonally to the ducts (3), wherein a ring-shaped mirror arrangement (15) may be provided outside of the brake disc (1) concentrically with the latter, which arrangement simultaneously deflects the light (8) to the camera (7), and wherein the mirror arrangement (15) may be constructed as a cylindrical mirror with internal metallization.

9. Device according to Claim 1 or 2, **characterised in that** the light source (6) is preferably disposed concentrically around the region of the outlets (10) of the preferably radially extending ducts (3) or of the ventilation ring (11) and is deflected into the ducts (3) via a ring-shaped outer wall (14), which is preferably formed orthogonally to the ducts (3), so that the light (17) passes outwards through the ducts (3), wherein a mirror arrangement (19) may preferably be positioned concentrically around the ducts (3), which arrangement simultaneously directs the light (17) impinging here to the camera (7), which is preferably disposed centrally relative to the passage (2) outside of the brake disc (1), and wherein the mirror arrangement (19) may be constructed as a mirror shaped like a cone envelope and with internal metallization.

10. Device according to Claim 8 or 9, **characterised in that** the camera (7) is provided with a wide-angle lens (12).

## Revendications

1. Dispositif pour la vérification de la pénétrabilité des canaux de ventilation d'un disque de frein (1), qui présente une pluralité de canaux de ventilation répartis sur la totalité de sa périphérie, les canaux de ventilation s'étendant essentiellement radialement depuis le bord extérieur (5) du disque de frein (1) dans un passage central (2) ou dans une bague de ventilation ouverte axialement vers l'extérieur et formée autour du passage central (2),
**caractérisé par** au moins une source lumineuse (6) pour l'éclairage simultané à travers tous les canaux (3) et par un appareil photographique (7) pour la reproduction simultanée de la lumière (8) traversant tous les canaux (3), la forme et/ou l'intensité d'un de chacun des points d'exploration (4) servant à l'évaluation de la pénétrabilité ou respectivement la qualité du canal (3) respectif.

2. Dispositif selon la revendication 1,
**caractérisé par le fait qu'**une unité de calcul est intercalée à la suite de l'appareil photographique (7) pour le traitement de l'image ou respectivement l'interprétation du signal.

3. Dispositif selon la revendication 1 ou 2,
**caractérisé par le fait que** la source lumineuse (6) est disposée de préférence sous forme annulaire autour des sorties (10) des canaux (3) s'étendant de préférence radialement, de telle manière que la lumière (8) arrive au passage central (2).

4. Dispositif selon l'une des revendications 1 à 3,
**caractérisé par le fait qu'**un ensemble de miroirs (13) est positionné dans le passage central (2) et dirige la lumière (8) incidente à cet endroit vers l'appareil photographique (7) disposé à l'extérieur du disque de frein (1), de préférence centralement au passage (2).

5. Dispositif selon l'une des revendications 1 à 4,
**caractérisé par le fait que** l'appareil photographique (7) est équipé d'un objectif (12) à, de préférence extrême, grand angle, en particulier d'un grand angulaire extrême, pour regarder dans ou à travers dans ou respectivement à travers les canaux (3), l'objectif (12) pouvant être disposé directement sur, ou au moins partiellement dans, le passage central (2) du disque de frein (1).

6. Dispositif selon l'une des revendications 1 à 5,
**caractérisé par le fait qu'**un ensemble de miroirs (13) est positionné dans le passage central (2) et dirige la lumière (8) incidente à cet endroit vers l'appareil photographique (7) disposé à l'extérieur du disque de frein (1) de préférence centralement au passage (2).

7. Dispositif selon la revendication 1 ou 2,
**caractérisé par le fait que** la source lumineuse (6) est disposée au moins partiellement à l'intérieur du passage (2) du disque de frein (1) de telle manière que la lumière (8) est dirigée à travers les canaux (3) de préférence radialement vers l'extérieur ou que la source lumineuse (6) est disposée à l'extérieur du disque de frein (1) de préférence centralement au passage (2) et que la lumière (8) est dirigée à travers les canaux (3) de préférence radialement vers l'extérieur par l'intermédiaire d'un ensemble de miroirs (13) positionné à peu près centralement dans le passage (2), un ensemble de miroirs (19) pouvant être positionné autour du bord (5) du disque de frein (1) et de ce fait tout autour des sorties (10) des canaux (3) et dévier simultanément la lumière (8) incidente à cet endroit sur l'appareil photographique (7), l'ensemble de miroirs (19) disposé tout autour du disque de frein (1) pouvant être réalisé sous forme d'un secteur d'enveloppe conique métallisée intérieurement de préférence en forme de bande et l'ensemble de miroirs (13) positionné dans le passage central (2) pouvant être réalisé sous forme d'un miroir conique (15).

8. Dispositif selon la revendication 1 ou 2,
**caractérisé par le fait que** la source lumineuse (6) est disposée de préférence sous forme annulaire autour des sorties (10) des canaux (3) s'étendant de préférence radialement, de telle manière que la lumière (8) arrive à travers les canaux (3) jusqu'à la bague de ventilation (11), ou que la source lumineuse (6) est disposée de préférence sous forme annulaire autour de la zone des sorties (10) des canaux (3) s'étendant de préférence radialement avec un diamètre au moins légèrement plus grand que le disque de frein (1) et est déviée dans les canaux (3) par l'intermédiaire d'un ensemble de miroirs (15) de telle manière que la lumière (8) arrive à travers les canaux (3) jusqu'à la bague de ventilation (11), la lumière (8) pouvant être déviée vers l'extérieur par l'intermédiaire d'une paroi externe (14) limitant la bague de ventilation (11) vers l'intérieur, réalisée concentrique, de préférence orthogonale, aux canaux (3), un ensemble de miroirs (15) de forme annulaire pouvant être disposé à l'extérieur du disque de frein (1) concentriquement à celui-ci, qui dévie la lumière (8) simultanément vers l'appareil photographique (7) et l'ensemble de miroirs (15) pouvant être réalisé sous la forme d'un miroir cylindrique avec une métallisation intérieure.

9. Dispositif selon la revendication 1 ou 2,
**caractérisé par le fait que** la source lumineuse (6) est disposée de préférence concentriquement autour de la zone des sorties (10) des canaux (3) s'étendant de préférence radialement ou de la bague de ventilation (11) et est déviée dans les canaux (3) par l'intermédiaire d'une paroi extérieure (14) réalisée de forme annulaire de préférence orthogonale aux canaux (3) de telle manière que la lumière (17) arrive vers l'extérieur à travers les canaux (3), un ensemble de miroirs (19 pouvant être positionné autour des canaux (3) de préférence concentriquement, qui dirige simultanément la lumière (17) incidente à cet endroit vers l'appareil photographique (7) disposé à l'extérieur du disque de frein (1), de préférence centralement au passage (2), et l'ensemble de miroirs (19) pouvant être réalisé sous forme d'un miroir en forme d'enveloppe conique avec une métallisation intérieure.

10. Dispositif selon la revendication 8 ou 9,
**caractérisé par le fait que** l'appareil photographique (7) est équipé d'un objectif (12) grand angulaire.
